(19) Europäisches Patentamt
European Patent Office
Office européen des brevets

(11) EP 3 605 651 A1

(12) # EUROPEAN PATENT APPLICATION
published in accordance with Art. 153(4) EPC

(43) Date of publication:
**05.02.2020 Bulletin 2020/06**

(21) Application number: **17901670.4**

(22) Date of filing: **30.11.2017**

(51) Int Cl.:
***H01M 2/16*** *(2006.01)* ***C08F 14/22*** *(2006.01)*
***C08L 27/16*** *(2006.01)*

(86) International application number:
**PCT/JP2017/043128**

(87) International publication number:
**WO 2018/173373 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.03.2017 JP 2017055105**

(71) Applicant: **Kureha Corporation**
**Chuo-ku**
**Tokyo 103-8552 (JP)**

(72) Inventors:
- **SAKAKIBARA, Yukitaro**
  **Tokyo 103-8552 (JP)**
- **WATANABE, Keisuke**
  **Tokyo 103-8552 (JP)**
- **KOBAYASHI, Shota**
  **Tokyo 103-8552 (JP)**

(74) Representative: **Zimmermann & Partner Patentanwälte mbB**
**Postfach 330 920**
**80069 München (DE)**

(54) **RESIN COMPOSITION, SEPARATOR OF SECONDARY BATTERY, AND SECONDARY BATTERY**

(57) The present invention provides a resin composition having excellent electrolyte solution retention ability. The resin composition contains an electrolyte composition containing a solvent and an electrolyte and a vinylidene fluoride copolymer. The vinylidene fluoride copolymer is a copolymer of vinylidene fluoride and a comonomer represented by Formula (1) below, wherein $R^1$ and $R^2$ are each independently a hydrogen atom or a fluorine atom, $R^3$ is a hydrogen atom, a fluorine atom, or an alkyl group having from 1 to 5 carbons, and $R^4$ is a basic group that is capable of forming an intermolecular hydrogen bond.

[Chemical Formula 1]

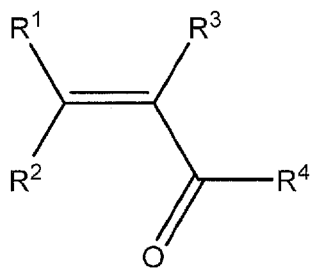

· · · (1)

EP 3 605 651 A1

## Description

### Technical Field

The present invention relates to a resin composition, a separator for a secondary battery, and a secondary battery. The present invention particularly relates to a resin composition used in a resin layer provided on a separator surface of a secondary battery, a separator for secondary batteries that uses the resin composition, and a secondary battery using the separator.

### Background Art

Non-aqueous electrolyte secondary batteries have high energy density, and thus are used not only in the power source of portable devices but also in various applications such as hybrid electric vehicles and electric vehicles. In addition, as fields of application have been expanded, a non-aqueous electrolyte secondary battery is required to have a smaller size, a lighter weight, and enhanced safety.

Furthermore, as the use of non-aqueous electrolyte secondary batteries has been extended to the field of tablet terminals and smartphones, the field of automobiles, and the like, a larger capacity and a larger area as well as superior safety are demanded for such non-aqueous electrolyte secondary batteries. Furthermore, because it becomes easier to cause displacement and peeling by allowing the area of the non-aqueous electrolyte secondary battery to be larger, enhancement in adhesiveness of positive electrodes, negative electrodes, and separators have been demanded.

As a method for enhancing adhesiveness, for example, Patent Document 1 discloses that the use of, as a middle layer, polymer particles containing a copolymer formed from a structural unit derived from an unsaturated dibasic acid, and/or a structural unit derived from an unsaturated dibasic acid monoester, and a structural unit derived from a vinylidene fluoride-based monomer enhances the adhesiveness between a positive electrode and a separator and between a negative electrode and a separator.

Furthermore, an example of the method for enhancing the safety is prevention of liquid leakage of an electrolyte solution. For example, Patent Document 2 discloses a composite porous film having a film containing an acryl-based polymer on a polyolefin-based porous film surface and discloses a film having excellent liquid retention properties for an electrolyte solution, i.e., a film achieving excellent safety.

Furthermore, it is known that, as a polymer used in a lithium-ion secondary battery, polyvinylidene fluoride can be used as a gel-like electrolyte of a lithium-ion secondary battery (Patent Document 3) and also can be used as a binder for a lithium-ion secondary battery (Patent Documents 4 and 5).

### Citation List

#### Patent Document

Patent Document 1: JP 2016-062835 A

Patent Document 2: JP 2013-206724 A

Patent Document 3: JP 2015-172101 A

Patent Document 4: JP 2013-229337 A

Patent Document 5: JP 2012-219125 A

### Summary of Invention

#### Technical Problem

However, the middle layer described in Patent Document 1 still has a problem of insufficient liquid retention properties for an electrolyte solution although the adhesiveness between a positive electrode and a separator and between a negative electrode and a separator is enhanced.

Furthermore, the composite porous film described in Patent Document 2 can ensure retention ability of an electrolyte solution and suppress leakage of the electrolyte solution to a certain extent; however, the porous film of an

olefin-based polymer has a problem of expanding a short-circuited part because the separator rapidly shrinks due to instantaneously generated heat.

The resin composition according to the present invention is completed in light of the problems described above, and an object of the present invention is to provide a resin composition that has excellent liquid retention properties for an electrolyte solution and that is used for a separator of a secondary battery.

Solution to Problem

To solve the problems described above, a resin layer formed on a separator surface for a secondary battery according to an embodiment of the present invention is a resin composition containing a vinylidene fluoride copolymer that is a copolymer of vinylidene fluoride and a comonomer represented by Formula (1) below.

[Chemical Formula 1]

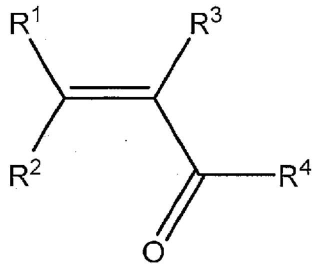

・・・ (1)

wherein, $R^1$ and $R^2$ are each independently a hydrogen atom or a fluorine atom, $R^3$ is a hydrogen atom, a fluorine atom, a chlorine atom, or an alkyl group having from 1 to 5 carbons, and $R^4$ is a basic group that is capable of forming an intermolecular hydrogen bond.

Advantageous Effects of Invention

According to the resin composition of the present embodiment, a resin layer for a secondary battery, the resin layer having excellent liquid retention properties for an electrolyte solution, can be obtained.

Description of Embodiments

The resin composition, the separator for a secondary battery, and the secondary battery according to embodiments of the present invention will be described below.

Resin composition

The resin composition according to the present embodiment is a resin composition that forms a resin layer provided on a separator surface of a secondary battery and contains a vinylidene fluoride copolymer. The vinylidene fluoride copolymer contains a structural unit derived from the comonomer represented by Formula (1) in addition to the vinylidene fluoride structural unit.

Vinylidene fluoride copolymer

The vinylidene fluoride copolymer of the present embodiment contains a vinylidene fluoride structural unit and a structural unit derived from the comonomer represented by Formula (1) (hereinafter, simply also referred to as a basic comonomer). Furthermore, the vinylidene fluoride copolymer of the present embodiment may contain a structural unit derived from a fluorine atom-containing comonomer that is different from the vinylidene fluoride and the basic comonomer (hereinafter, simply referred to as "fluorine-containing monomer") and another structural unit derived from another monomer in the range that does not impair the effect of the present embodiment, in addition to the vinylidene fluoride structural unit and the structural unit derived from a basic comonomer

[Chemical Formula 2]

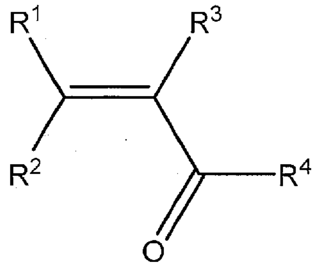

· · · (1)

wherein, $R^1$ and $R^2$ in Formula (1) are each independently a hydrogen atom or a fluorine atom. Among these, at least one of $R^1$ or $R^2$ is preferably a hydrogen atom, and the both $R^1$ and $R^2$ are more preferably hydrogen atoms.

$R^3$ is a hydrogen atom, a fluorine atom, a chlorine atom, or an alkyl group having from 1 to 5 carbons. Examples of the alkyl group having from 1 to 5 carbons include a methyl group, an ethyl group, a propyl group, an isopropyl group, a butyl group, an isobutyl group, a sec-butyl group, a tert-butyl group, a pentyl group, a 1-methylbutyl group, a 2-methylbutyl group, a 3-methylbutyl group, a 1-ethylpropyl group, a 1,1-dimethylpropyl group, a 1,2-dimethylpropyl group, a 2,2-dimethylpropyl group, and the like. Among these, $R^3$ is preferably a hydrogen atom, a fluorine atom, a chlorine atom, or a methyl group, and more preferably a hydrogen atom or a fluorine atom.

$R^4$ is a basic group that is capable of forming an intermolecular hydrogen bond. Basicity in the basic group of the present embodiment is determined based on the definition of the Bronsted. $R^4$ is a basic group that acts as a proton acceptor when the other molecule is a proton donor.

The basic group in the present embodiment is particularly preferably a basic group containing a nitrogen atom. The nitrogen atom-containing functional group may be a straight functional group or a functional group having a cyclic structure. Examples of the nitrogen atom-containing functional group include a pyridyl group, an amide group, and an amino group. Among these nitrogen atom-containing functional groups, an amino group or an amide group is more preferred.

Examples of the amide include $-CONR^5R^6$, and $R^5$ is a hydrogen atom or an alkyl group having 1 or 2 carbons, and more preferably a hydrogen atom. $R^6$ is an atomic group having from 1 to 5 main chain atoms and having a molecular weight of 500 or less, and is more preferably an atomic group having from 1 to 5 atoms and a molecular weight of 250 or less.

Examples of the compound represented by Formula (1) include, but not particularly limited to, (meth)acrylamide, N-methyl(meth)acrylamide, N-isopropyl(meth)acrylamide, N-tert-butyl(meth)acrylamide, N-phenyl(meth)acrylamide, N-methoxymethyl(meth)acrylamide, N-butoxymethyl(meth)acrylamide, 4-acryloylmorpholine, diacetone(meth)acrylamide, N,N-dimethyl(meth)acrylamide, N,N-diethyl(meth)acrylamide, 2-(meth)acrylamide-2-methylpropane sulfonic acid, aminomethyl acrylate, 2-aminoethyl acrylate, 3-aminopropyl acrylate, methylaminomethyl acrylate, 2-(methylamino)ethyl acrylate, 3-(methylamino)propyl acrylate, dimethylaminomethyl acrylate, 2-(dimethylamino)ethyl acrylate, 3-(dimethylamino)propyl acrylate, and the like.

Fluorine-containing monomer

The fluorine-containing monomer is not particularly limited as long as the fluorine-containing monomer contains fluorine and is copolymerizable with the vinylidene fluoride and the compound represented by Formula (1), and examples thereof include vinyl fluoride, trifluoroethylene (TrFE), tetrafluoroethylene (TFE), chlorotrifluoroethylene (CTFE), hexafluoropropylene (HFP), and the like. The fluorine-containing monomer may be used alone, or a combination of two or more types of the fluorine-containing monomers may be used. In the present embodiment, in the case where a fluorine-containing monomer is contained, HFP or CTFE is preferred from the perspective of polymerization reactivity.

Other monomer

Examples of other monomer except the vinylidene fluoride, the basic comonomer, and the fluorine-containing monomer include hydrocarbon-based monomers, such as ethylene and propylene, acrylate-based monomers, and vinyl ether-based monomers. Furthermore, one type of these other monomers may be used alone, or two or more types may be used.

Vinylidene fluoride copolymer

The vinylidene fluoride copolymer in the present embodiment contains the vinylidene fluoride as a main component. The content of the vinylidene fluoride structural unit in the vinylidene fluoride copolymer is preferably from 99.9 mol% to 80 mol%, more preferably from 99.9 mol% to 90 mol%, and particularly preferably from 99.9 mol% to 95 mol%, relative to a total monomer amount of 100 mol%.

The content of the structural unit of the basic comonomer in the vinylidene fluoride copolymer is preferably from 0.1 mol% to 10 mol%, more preferably from 0.1 mol% to 5 mol%, and particularly preferably from 0.1 mol% to 1 mol%, relative to a total monomer amount of 100 mol%. The effect of enhancing electrolyte solution retention ability can be achieved by setting the monomer structure to the range described above.

In the case where the fluorine-containing monomer is contained in the vinylidene fluoride copolymer, the content of the structural unit of the fluorine-containing monomer in the vinylidene fluoride copolymer is preferably from 0.1 mol% to 20 mol%, more preferably from 0.5 mol% to 10 mol%, and particularly preferably from 1 mol% to 5 mol%, relative to a total monomer amount of 100 mol%.

The content ratio of the structural units in the vinylidene fluoride copolymer can be determined from results of IR spectrum analysis and the like. For example, by IR spectrum, a ratio between the amount of the structural unit derived from the basic comonomer to the amount of the structural unit derived from the vinylidene fluoride is determined. From this ratio, the amount of the structural unit derived from the vinylidene fluoride and the amount of the structural unit derived from the basic comonomer can be calculated.

Method for producing vinylidene fluoride copolymer

The method for producing the vinylidene fluoride copolymer of the present embodiment is not particularly limited as long as the method copolymerizes the vinylidene fluoride and the basic comonomer, and production can be performed by a known method. Examples thereof include a method in which polymerization is performed by using only the vinylidene fluoride and then the basic comonomer is reacted thereto, a method in which polymerization is performed by using only the basic comonomer and then the vinylidene fluoride is reacted thereto, a method in which a product obtained by polymerizing only the vinylidene fluoride and a product obtained by polymerizing only the basic comonomer are reacted to bond each other, and a method in which the vinylidene fluoride and the basic comonomer are directly reacted. Among these, a method in which the vinylidene fluoride and the basic comonomer are directly reacted is preferred from the perspective of simplicity. Examples of the method in which the vinylidene fluoride and the basic comonomer are directly reacted include a method described in Patent Document 3. Specific examples include a method in which the basic comonomer is added in portions or continuously to the vinylidene fluoride to polymerize. The type of the polymerization reaction is not particularly limited, and suspension polymerization, emulsion polymerization, solution polymerization, and the like can be employed. From the perspective of ease in post-treatment and the like, suspension polymerization in an aqueous system and emulsion polymerization are preferred, and suspension polymerization in an aqueous system is particularly preferred.

Physical properties of vinylidene fluoride copolymer

The vinylidene fluoride copolymer of the present embodiment has an inherent viscosity of a value preferably in a range from 1.0 to 10.0 dL/g, and more preferably in a range from 1.5 to 7.0 dL/g. By setting the inherent viscosity to the range described above, superior productivity, solubility, and gel strength can be achieved. Note that the inherent viscosity in the present specification refers to a logarithmic viscosity at 30°C of a solution obtained by dissolving 4 g of a resin in 1 liter of N,N-dimethylformamide. More specifically, the inherent viscosity $\eta_i$ can be calculated based on the following equation, by dissolving 80 mg of the vinylidene fluoride copolymer in 20 mL of N,N-dimethylformamide, and using an Ubbelohde viscometer in a 30°C thermostatic bath.

$$\eta_i = (1/C)\square\ln(\eta/\eta_0)$$

Here, $\eta$ is the viscosity of the polymer solution, $\eta_0$ is the viscosity of N,N-dimethylformamide (solvent) alone, and C is 0.4 g/dL.

Resin composition

The resin composition according to the present embodiment is not particularly limited as long as the resin

composition contains the vinylidene fluoride copolymer according to the present embodiment and is used for forming a resin layer provided on a separator surface of a secondary battery. The resin composition may contain an organic solvent to effectively form the resin layer on the separator surface.

As the organic solvent contained in the resin composition of the present embodiment, an organic solvent that acts to dissolve the vinylidene fluoride-based copolymer is used, and a solvent having polarity is preferably used. Specific examples of the organic solvent include N-methyl-2-pyrrolidone, N,N-dimethylformamide, N,N-dimethylacetamide, dimethyl sulfoxide, hexamethylphosphoramide, dioxane, tetrahydrofuran, tetramethylurea, triethyl phosphate, trimethyl phosphate, acetone, 2-butanone, cyclohexanone, and the like. N-methyl-2-pyrrolidone, N,N-dimethylformamide, acetone, and 2-butanone are preferred. Furthermore, one type of non-aqueous solvent may be used alone, or two or more types may be used.

In the resin composition in the present embodiment, besides the vinylidene fluoride copolymer, another component may be contained in addition to the vinylidene fluoride copolymer in the range that does not impair the effect of the present embodiment. By allowing another component to be contained, the viscosity and the adhesiveness can be adjusted.

As such another component, various additives, such as inorganic fillers, organic fillers, dispersing agents, electrolyte solutions, electrolytes, and electrolyte polymers, can be contained.

As the inorganic fillers, inorganic fillers that are typically used in a resin film provided between a separator and a positive electrode or a negative electrode of a non-aqueous electrolyte secondary battery can be used without limitation. Inorganic fillers are typically components that are thermally stable. By allowing such inorganic particles to be contained in a gel-like electrolyte, the resin layer obtained by the resin composition according to the present embodiment tends to maintain the shape and can make the degree of area shrinkage during heating of the separator small.

Examples of the inorganic fillers include $SrTiO_3$, $SnO_2$, $CeO_2$, MgO, NiO, CaO, ZnO, $ZrO_2$, $Y_2O_3$, $Al_2O_3$, $TiO_2$, $SiO_2$, SiC, clay minerals, mica, calcium carbonate, and the like. One type of these may be used alone, or two or more types may be used. From the perspective of safety of battery and stability of coating fluid, the inorganic particles are preferably $Al_2O_3$, MgO, $SiO_2$, or ZnO. From the perspectives of insulating properties and electrochemical stability, the inorganic particles are more preferably $Al_2O_3$.

The average particle size of the inorganic fillers is preferably from 5 nm to 2 μm, and more preferably from 10 nm to 1 μm.

The content of the vinylidene fluoride copolymer in the resin composition of the present embodiment is preferably from 0.1 mass% to 60 mass%, more preferably from 0.1 mass% to 30 mass%, and particularly preferably from 0.1 mass% to 10 mass%.

The method for preparing the resin composition of the present embodiment is not particularly limited. For example, the resin composition can be prepared by adding a vinylidene fluoride copolymer in an organic solvent and stirring to dissolve the vinylidene fluoride copolymer.

Structure for non-aqueous electrolyte secondary battery

The structure for a non-aqueous electrolyte secondary battery according to the present embodiment has a positive electrode, a negative electrode, and a separator, and a resin layer containing the vinylidene fluoride copolymer is provided on a surface of a separator. Therefore, a resin layer containing the vinylidene fluoride copolymer is provided either between the positive electrode and the separator or between the negative electrode and the separator.

The structure for a non-aqueous electrolyte secondary battery according to the present embodiment is similar to conventional structures for non-aqueous electrolyte secondary batteries except for the fact that a resin layer containing the vinylidene fluoride copolymer according to the present embodiment is provided on a surface of a separator in the manner that the resin layer is positioned either between a positive electrode and a separator or between a negative electrode and a separator.

As the positive electrode, the separator, and the negative electrode, those that can form a structure for a non-aqueous electrolyte secondary battery, including those publicly known, can be used without limitation.

In the structure for a non-aqueous electrolyte secondary battery in the present embodiment, the positive electrode, the negative electrode, and the separator may be directly in contact with the resin layer, or another layer may be interposed between the resin layer and the positive electrode, the negative electrode, and the separator. From the perspectives of adhesive strength between the positive electrode and the resin layer, adhesive strength between the negative electrode and the resin layer, and adhesive strength between the separator and the resin layer, the positive electrode and the resin layer are preferably in direct contact, the negative electrode and the resin layer are preferably in direct contact, and the separator and the resin layer are preferably in direct contact.

Hereinafter, in the present specification, the positive electrode and the negative electrode may be collectively referred to as "electrode", and the positive electrode current collector and the negative electrode current collector may be collectively referred to as "current collector".

Separator

The separator electrically insulates the positive electrode and the negative electrode and retains the electrolyte solution in a non-aqueous electrolyte secondary battery. In the separator in the present embodiment, a resin layer formed from the resin composition according to the present embodiment is provided on its surface.

The separator body is not particularly limited, and examples thereof include a single-layered or multi-layered porous films of polyolefin-based polymers (e.g. polyethylene, polypropylene, and the like), polyester-based polymers (e.g. polyethylene terephthalate and the like), polyimide-based polymers (e.g. aromatic polyamide-based polymers, polyetherimide, and the like), polyethersulfone, polysulfone, polyether ketone, polystyrene, polyethylene oxide, polycarbonate, polyvinyl chloride, polyacrylonitrile, polymethyl methacrylate, ceramics, and the like and a single-layered or multi-layered porous film formed from a mixture of at least two types of these; nonwoven fabric; glass; paper; and the like. Use of a porous film of polyolefin-based polymer is preferred. Examples of the polyolefin-based polymer film include a single-layered polypropylene separator, a single-layered polyethylene separator, a three-layered polypropylene/polyethylene/polypropylene separator, and the like.

From the perspectives of mechanical characteristics and internal resistance, the thickness of the resin layer is from 3 to 25 $\mu$m, preferably from 4 to 25 $\mu$m, and more preferably from 5 to 25 $\mu$m.

The resin layer can be formed by applying the resin composition according to the present embodiment on a separator and drying it. Since the resin layer provided on the separator is produced by using the vinylidene fluoride copolymer described above, excellent adhesive strength and liquid retention properties for the electrolyte solution are achieved. Thus, by using the separator according to the present embodiment in a non-aqueous electrolyte secondary battery, even in the case of the non-aqueous electrolyte secondary battery having a larger area, displacement due to external force and peeling are less likely to occur between the positive electrode and the separator and between the negative electrode and the separator, and battery performance can be maintained for a long period of time. Furthermore, the desired capacity tends to be obtained.

An example of the method for producing the resin layer according to the present embodiment is a method in which a resin composition containing a vinylidene fluoride copolymer and a mixed solvent of a good solvent and a poor solvent of the vinylidene fluoride copolymer is applied on a separator and dried. The preparation can be also performed by, after a vinylidene fluoride copolymer is dissolved in a good solvent and applied on a separator, immersing this in a poor solvent, and then drying the good solvent and the poor solvent.

Examples of the good solvent used for during the production of the resin layer include polar amide solvents, such as N-methylpyrrolidone, dimethylacetamide, and dimethylformamide. Examples of the poor solvent include water, methanol, ethanol, propyl alcohol, butyl alcohol, butanediol, ethylene glycol, propylene glycol, and tripropylene glycol.

The method of applying the resin composition onto the separator is not particularly limited. Examples thereof include a method of applying the resin composition on a base material by using a bar coater, a die coater, a comma coater, a gravure coater of direct gravure method, reverse gravure method, kiss reverse gravure method, offset gravure method, or the like, a reverse roll coater, a microgravure coater, an air-knife coater, a dip coater, or the like.

Positive electrode

The positive electrode in the present embodiment is not particularly limited as long as the positive electrode has a positive electrode active material and current collecting function, and, specifically, is formed from a positive electrode mixture layer containing a positive electrode active material and a binding agent, and a positive electrode current collector that functions as a current collector and retains the positive electrode mixture layer.

The thickness of the electrode mixture layer in the present embodiment is from 5 to 250 $\mu$m, preferably from 5 to 150 $\mu$m, and more preferably from 5 to 100 $\mu$m.

The positive electrode active material is not particularly limited as long as it acts as a positive electrode active material, and known positive electrode active materials can be used. In the case where the non-aqueous electrolyte secondary battery is a lithium-ion secondary battery, a lithium-based positive electrode active material containing at least lithium is preferred as the positive electrode active material. Examples of the lithium-based positive electrode active material include composite metal chalcogenide compounds represented by the general formula $LiMY_2$ (where M is at least one type of a transition metal such as Co, Ni, Fe, Mn, Cr, or V, and Y is a chalcogen element such as O or S) such as $LiCoO_2$ or $LiNi_xCo_{1-x}O_2$ ($0 \leq x \leq 1$); composite metal oxides having a spinel structure such as $LiMn_2O_4$, and olivine-type lithium compounds such as $LiFePO_4$, and the like.

Furthermore, the positive electrode mixture layer in the present embodiment may include a conductive auxiliary in order to enhance conductivity. As the conductive auxiliary, carbonaceous materials, such as carbon black, graphite fine powders, graphite fibers, and carbon nanotubes, and metal fine powders or metal fibers formed from nickel, aluminum, and the like are used.

The binding agent binds the positive electrode active material and the conductive auxiliary. The binding agent

is not particularly limited as long as it is a binding agent used for lithium-ion secondary battery. For example, fluorine-containing resins, such as polytetrafluoroethylene, polyvinylidene fluoride, and fluororubber, mixtures of styrene-butadiene rubber and carboxymethyl cellulose, thermoplastic resins, such as polypropylene and polyethylene, can be used; however, use of polyvinylidene fluoride is preferred for the positive electrode.

The positive electrode current collector is not particularly limited as long as the positive electrode current collector has excellent conductivity that can supply electricity to outside of the secondary battery and does not prevent electrode reaction in the secondary battery. In the case where the non-aqueous electrolyte secondary battery is a lithium-ion secondary battery, the positive electrode current collector is preferably aluminum or an alloy thereof.

Negative electrode

The negative electrode according to the present embodiment is not particularly limited as long as the negative electrode has a negative electrode active material and current collecting function, and is formed from a negative electrode mixture layer containing a negative electrode active material and a binding agent, and a negative electrode current collector that functions as a current collector and retains the negative electrode mixture layer.

Examples of the negative electrode active material include carbon materials, metal and alloy materials, metal oxides, Si-based negative electrode materials, Li-based negative electrode materials such as lithium titanate, and the like. Among these, from the perspective of making the energy density of the battery high, carbon materials are preferred, and artificial graphite, natural graphite, non-graphitizable carbon, graphitizable carbon, and the like are used. One type of the carbon materials may be used alone, or two or more types may be used in combination.

The negative electrode mixture layer in the present embodiment may contain a conductive auxiliary to enhance the conductivity of the negative electrode mixture layer. Examples of the conductive auxiliary that can be used include carbonaceous materials, such as carbon black, graphite fine powders, carbon nanotubes, or graphite fibers, and metal fine powders or metal fibers formed from nickel, aluminum, and the like.

The binding agent binds the negative electrode active material and the conductive auxiliary. As the binding agent in the present embodiment, those same as the binding agents for the positive electrode can be used. Polyvinylidene fluoride, a mixture of styrene-butadiene rubber and carboxymethyl cellulose, a mixture of polyvinylidene fluoride particles and carboxymethyl cellulose, and the like are preferred.

The current collector is not particularly limited as long as the current collector has excellent conductivity that can supply electricity to outside of the secondary battery and does not prevent electrode reaction in the secondary battery. The current collector in the present embodiment is preferably a current collector formed from copper, and more preferably a copper foil.

Non-aqueous electrolyte secondary battery

The non-aqueous electrolyte secondary battery according to the present embodiment is obtained from the structure for a non-aqueous electrolyte secondary battery. Examples of the battery structure of the non-aqueous electrolyte secondary battery include known battery structures, such as coin batteries, button batteries, cylindrical batteries, square batteries, and the like.

Examples of the component constituting a non-aqueous electrolyte secondary battery, other than the structure for a non-aqueous electrolyte secondary battery described above, include non-aqueous electrolyte solutions, cylindrical cases, laminate pouches, and the like.

The non-aqueous electrolyte solution according to the present embodiment is obtained by dissolving an electrolyte in a non-aqueous solvent. Examples of the non-aqueous solvent include aprotic organic solvents that are capable of transporting cations and anions constituting the electrolyte and that do not substantially diminish the function of the secondary battery. Examples of such non-aqueous solvent include organic solvents used as non-aqueous solvents of lithium-ion secondary batteries, such as carbonates, hydrocarbon halides, ethers, ketones, nitriles, lactones, esters, oxolane compounds, and the like. Among these, propylene carbonate, ethylene carbonate, dimethyl carbonate, diethyl carbonate, ethylmethyl carbonate, 1,2-dimethoxyethane, 1,2-diethoxyethane, methyl propionate, ethyl propionate, succinonitrile, 1,3-propane sultone, fluoroethylene carbonate, vinylene carbonate, and the like are preferred. One type of the non-aqueous solvents may be used alone, or two or more types may be used.

Furthermore, the type of electrolyte is not particularly limited as long as the electrolyte is capable of transporting the constituent cations and anions by the non-aqueous solvent described above and that does not substantially diminish the function of the secondary battery. Here, in the case where the non-aqueous electrolyte secondary battery is a lithium-ion secondary battery, examples of the electrolyte include lithium salts. Examples of the lithium salt include lithium salts of fluoro complex anions, such as $LiPF_6$, $LiAsF_6$, and $LBF_4$; inorganic lithium salts, such as $LiClO_4$, LiCl, and LiBr; lithium sulfonate, such as $LiCH_3SO_3$ and $LiCF_3SO_3$; and organic lithium salts, such as $Li(CF_3OSO_2)_2N$, $Li(CF_3OSO_2)_3C$, $Li(CF_3SO_2)_2N$, and $Li(CF_3SO_2)_3C$. As the electrolyte, one type of the lithium salts may be used alone, or two or more

types may be contained. Furthermore, in addition to these lithium salts, for example, other salts except the lithium salts, such as light metal salts except the lithium salts, may be contained. Among the lithium salts described above, from the perspectives of reducing internal resistance and achieving superior effect, use of one type of or two or more types of $LiPF_6$, $LiBF_4$, $LiClO_4$, and $LiAsF_6$ is particularly preferred, and use of $LiClO_4$ is more preferred.

Because the resin composition of the present embodiment is a resin composition having excellent liquid retention properties for the electrolyte solution, the non-aqueous electrolyte secondary battery containing the separator of the resin film of the present embodiment has high liquid retention properties for the electrolyte solution, thus reduces resistance of the battery, and can enhance output performance. Furthermore, because of the high liquid retention properties for the electrolyte solution, safety against liquid leakage can be enhanced.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

Summary

The resin layer formed on a separator surface for a secondary battery according to an embodiment of the present invention is a resin composition containing a vinylidene fluoride copolymer that is a copolymer of vinylidene fluoride and a comonomer represented by Formula (1) below.

[Chemical Formula 3]

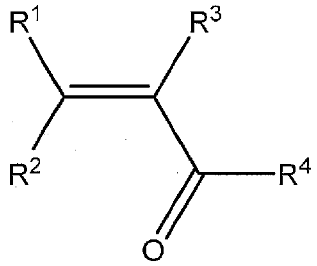

· · · (1)

wherein, $R^1$ and $R^2$ are each independently a hydrogen atom or a fluorine atom, $R^3$ is a hydrogen atom, a fluorine atom, a chlorine atom, or an alkyl group having from 1 to 5 carbons, and $R^4$ is a basic group that is capable of forming an intermolecular hydrogen bond.

Furthermore, in the resin composition according to an embodiment of the present invention, a content of a structural unit derived from the comonomer represented by Formula (1) above in the vinylidene fluoride copolymer is preferably from 0.1 mol% to 10 mol% relative to a total monomer amount of 100 mol%.

Furthermore, in the resin composition according to an embodiment of the present invention, $R^4$ in Formula (1) above is preferably a nitrogen atom-containing functional group.

Furthermore, in the resin composition according to an embodiment of the present invention, the nitrogen atom-containing functional group is preferably amine or amide.

Furthermore, in the resin composition according to an embodiment of the present invention, the vinylidene fluoride copolymer may be a copolymer of the vinylidene fluoride, the comonomer represented by Formula (1) above, and a fluorine atom-containing comonomer that is different from the comonomer.

Furthermore, the separator of a secondary battery according to an embodiment of the present invention contains a resin layer formed from the resin composition described above on the surface.

Furthermore, the secondary battery according to an embodiment of the present invention contains the separator described above.

## Examples

### Example 1

Production of vinylidene fluoride copolymer

In an autoclave with an internal volume of 2 liters, 1060 g of ion-exchanged water, 0.6 g of Metolose SM-100 (available from Shin-Etsu Chemical Co., Ltd.) as a suspending agent, 0.1 g of acrylamide (available from Kanto Chemical Co., Inc.), 3.28 g of 50 wt.% di-i-propyl peroxy dicarbonate (IPP)-Freon 225cb solution as a polymerization initiator, 0.5 g of ethyl acetate (available from Kanto Chemical Co., Inc.) as a chain transfer agent, 370 g of vinylidene fluoride (VDF), and 40 g of hexafluoropropylene (HFP) were charged, and the temperature was increased to 29°C. A 5 wt.% acrylamide aqueous solution was then gradually added at a rate of 0.1 g/min while the temperature was maintained at 29°C. The total amount of 4.1 g (including the initially added amount) (0.29 mol% relative to the total amount of monomer) of acrylamide was added. Polymerization was performed for a total of 18 hours from the start of temperature increase. After polymerization was ended, the polymer slurry was heat-treated for 60 minutes at 95°C. The polymer slurry was then dehydrated, washed with water, and dried again at 80°C for 20 hours to obtain a vinylidene fluoride copolymer.

The inherent viscosity of the obtained polymer was 1.86 dL/g. Furthermore, based on the IR spectrum, the $A_{C=O}/A_{C-H}$ of the obtained vinylidene fluoride copolymer was 0.22.

Production of resin composition particle

Ethylene carbonate and propylene carbonate were mixed at a mass ratio of 3:2 to obtain a non-aqueous solvent. In the obtained non-aqueous solvent, lithium hexafluorophosphate was dissolved to form the concentration of 1 mol/L, and thus an electrolyte composition was prepared. A mixture was prepared by adding 1.5 g of vinylidene fluoride copolymer, 100 g of dimethyl carbonate as a plasticizer, and alumina to 40 g of the electrolyte composition, and heating and agitating. The mixture was placed in a cylindrical container, and the plasticizer was dried and removed to obtain a resin composition.

Evaluation test for liquid retention properties

The resin composition was cut out into an appropriate size to make a test piece. The pressure of 30 kPa was applied to the test piece of the resin composition, whose weight was measured in advance, and maintained for 20 minutes. After the weight was removed, the exuded electrolyte solution from the resin composition was wiped. The weight of the test piece was measured, and the weight maintenance percentage for the liquid retention properties (wt.%) was calculated as a relative value relative to the weight before the test, based on the following equation.

Weight maintenance percentage for liquid retention properties = [(weight of resin after application of load)/(weight of resin before application of load)] x 100

The weight maintenance percentage for the liquid retention properties in the evaluation test for liquid retention properties of the obtained resin composition was 69%. Furthermore, the physical properties and the composition of the obtained vinylidene fluoride copolymer are shown in Table 1.

### Example 2

A gel-like electrolyte was obtained in the same manner as in Example 1 except for changing the charged amount of the acrylamide of Example 1 to 0.55 mol%. As a result of performing the evaluation test for the liquid retention properties in the same manner as in Example 1, the weight maintenance percentage for the liquid retention properties of the obtained gel-like electrolyte was 70%. Furthermore, the physical properties and the composition of the obtained vinylidene fluoride copolymer are shown in Table 1.

### Comparative Example 1

A gel-like electrolyte was obtained in the same manner as in Example 1 except for changing the acrylamide of Example 1 to monomethyl maleate and changing the charged amount thereof to 0.27 mol%. As a result of performing the evaluation test for the liquid retention properties in the same manner as in Example 1, the weight maintenance percentage for the liquid retention properties of the obtained gel-like electrolyte was 64%. Furthermore, the physical properties and the composition of the obtained vinylidene fluoride copolymer are shown in Table 1.

Comparative Example 2

A gel-like electrolyte was obtained in the same manner as in Example 1 except for changing the acrylamide of Example 1 to ammonium persulfate (APS) and changing the charged amount thereof to 0.27 mol%. As a result of performing the evaluation test for the liquid retention properties in the same manner as in Example 1, the weight maintenance percentage for the liquid retention properties of the obtained gel-like electrolyte was 64%. Furthermore, the physical properties and the composition of the obtained vinylidene fluoride copolymer are shown in Table 1.

Comparative Example 3

A vinylidene fluoride copolymer was prepared by polymerization without adding acrylamide of Example 1. To this, 0.3 wt.% of polyacrylamide (available from Sigma-Aldrich) was added to prepare a polymer mixture. A gel-like electrolyte was obtained in the same manner as in Example 1 except for using the polymer mixture in place of the vinylidene fluoride copolymer. As a result of performing the evaluation test for the liquid retention properties in the same manner as in Example 1, the weight maintenance percentage for the liquid retention properties of the obtained gel-like electrolyte was 62%.

As is clear from Table 1, the resin composition of each of Examples exhibited higher weight maintenance percentage for the liquid retention properties and superior liquid retention properties compared to those of Comparative Examples.

[Table 1]

| | Charged amount (mol%) | | | Comonomer type | Inherent viscosity (dL/g) | IR intensity ratio AC=O/AC-H | Weight maintenance percentage for liquid retention properties (%) |
|---|---|---|---|---|---|---|---|
| | VDF | HFP | Co-monomer | | | | |
| Example 1 | 95.4 | 4.3 | 0.29 | Acrylamide | 1.86 | 0.22 | 69 |
| Example 2 | 95.2 | 4.3 | 0.55 | Acrylamide | 1.84 | 0.33 | 70 |
| Comparative Example 1 | 95.4 | 4.3 | 0.27 | Monomethyl maleate | 2.00 | 0.36 | 64 |
| Comparative Example 2 | 95.4 | 4.3 | 0.27 | APS | 2.23 | 0.44 | 64 |

Industrial Applicability

The resin composition of an embodiment of the present invention can be suitably used as a resin composition for separator application of a non-aqueous battery.

**Claims**

1. A resin composition for forming a resin layer provided on a separator surface of a secondary battery, the resin composition comprising a vinylidene fluoride copolymer that is a copolymer of vinylidene fluoride and a comonomer represented by Formula (1):

[Chemical Formula 1]

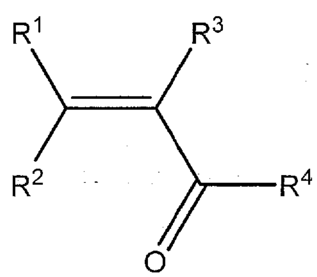

・・・(1)

where $R^1$ and $R^2$ are each independently a hydrogen atom or a fluorine atom, $R^3$ is a hydrogen atom, a fluorine atom, a chlorine atom, or an alkyl group having from 1 to 5 carbons, and $R^4$ is a basic group that is capable of forming an intermolecular hydrogen bond.

2. The resin composition according to claim 1, wherein a content of a structural unit derived from the comonomer represented by the Formula (1) in the vinylidene fluoride copolymer is from 0.1 mol% to 10 mol% relative to a total monomer amount of 100 mol%.

3. The resin composition according to claim 1 or 2, wherein $R^4$ in the Formula (1) is a nitrogen atom-containing functional group.

4. The resin composition according to claim 3, wherein the nitrogen atom-containing functional group is amine or amide.

5. The resin composition according to any one of claims 1 to 4, wherein the vinylidene fluoride copolymer is a copolymer of vinylidene fluoride, the comonomer represented by Formula (1) above, and a fluorine atom-containing comonomer that is different from the comonomer.

6. A separator for a secondary battery comprising a resin layer formed from the resin composition described in any one of claims 1 to 5 on a surface.

7. A secondary battery comprising the separator described in claim 6.

## INTERNATIONAL SEARCH REPORT

International application No.
PCT/JP2018/043128

A. CLASSIFICATION OF SUBJECT MATTER
Int.Cl. H01M2/16(2006.01)i, C08F14/22(2006.01)i, C08L27/16(2006.01)i

According to International Patent Classification (IPC) or to both national classification and IPC

B. FIELDS SEARCHED

Minimum documentation searched (classification system followed by classification symbols)
Int.Cl. H01M2/16, C08F14/22, C08L27/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | JP 2011-012266 A (TEIJIN LTD.) 20 January 2011, paragraphs [0012], [0041]-[0043], [0059]-[0061], example 1 & US 2002/0197413 A1, paragraphs [0016], [0078]-[0080], [0107]-[0112], example 1 & JP 2003-171495 A & EP 1298740 A2 & CA 2403061 A1 & KR 10-2003-0027754 A & KR 10-2009-0076860 A & CN 1408466 A & TW 252166 B | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 February 2018 (06.02.2018) | 20 February 2018 (20.02.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/043128

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-229337 A (DAIKIN INDUSTRIES, LTD.) 07 November 2013, paragraphs [0010]-[0012], [0151], [0154], example 1 & US 2015/0017532 A1, paragraphs [0009]-[0012], [0183], [0186]-[0190], example 1 & JP 2013-219016 A & WO 2013/111822 A1 & CN 104053687 A & KR 10-2014-0112538 A | 1-7 |
| X | WO 2014/065258 A1 (DAIKIN INDUSTRIES, LTD.) 01 May 2014, paragraphs [0012]-[0016], [0021]-[0033], [0072]-[0074] & US 2015/0280196 A1, paragraphs [0011]-[0015], [0024]-[0035], [0080]-[0082] & KR 10-2015-0043383 A & CN 104737326 A | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016062835 A
- JP 2013206724 A
- JP 2015172101 A
- JP 2013229337 A
- JP 2012219125 A